Europäisches Patentamt

(19) European Patent Office

Office européen des brevets

(11) Publication number: **0 150 273**
**B1**

(12) **EUROPEAN PATENT SPECIFICATION**

(45) Date of publication of patent specification: **12.09.90**

(21) Application number: **84112622.0**

(22) Date of filing: **19.10.84**

(51) Int. Cl.⁵: **G 06 F 3/023,** G 06 F 15/20,
G 06 F 15/38

(54) **Multi-lingual system across nodes.**

(30) Priority: **08.11.83 US 549768**

(43) Date of publication of application:
**07.08.85 Bulletin 85/32**

(45) Publication of the grant of the patent:
**12.09.90 Bulletin 90/37**

(84) Designated Contracting States:
**DE FR GB IT**

(56) References cited:
**EP-A-0 014 312**
**EP-A-0 076 909**
**GB-A-1 363 910**
**US-A-4 130 882**

(73) Proprietor: **International Business Machines
Corporation
Old Orchard Road
Armonk, N.Y. 10504 (US)**

(72) Inventor: **Kelly, Keith F.
4034 Hockaday
Dallas Texas 75229 (US)**

(74) Representative: **Combeau, Jacques
Compagnie IBM France Département de
Propriété Intellectuelle
F-06610 La Gaude (FR)**

Courier Press, Leamington Spa, England.

## Description

Field of the Invention

The present invention is directed to improvements in data processing systems which allow concurrent multi-lingual use, and more particularly, the invention insures that the correct national language is used even when a message is sent across nodes in a data processing system.

Background of the Invention

The change from centralized, batch operations of data processing systems to distributed, interactive usage has resulted in more users being directly involved with these systems. When a data processing system is used in a country with multiple national languages or is accessed by user terminals located in different countries with different national languages, the system must accept commands and respond in the national language or languages of the users. In the past, support for national languages has been accomplished by placing all messages in a selected national language, or on a user by user basis such that each user will see messages of one national language. The first approach fails to offer a solution for users in a country, such as Canada, where there are more than one national language. Both approaches handle output only, are typically limited to messages, and have the following problems:

1. Language-dependent text other than messages exist in most computers in the form of language dependent (a) common verbs entered as input, such as "Delete", which must be recognizable by a program without need for separate programs to handle each national language, (b) keywords entered as input in commands or as screen panel fields, such as "source", (c) online documentation, or (d) prompts and help information. Thus, the problem of treating language dependant text is illustrated for example by European Patent Application EP-A1-0047414, which describes a method for converting control messages, and only those, into message codes, and further into a message address in an address table, from where a translated message can then be retrieved by the operator according to the desired language.

2. They do not allow appropriate responses from service functions in a connected computer that has no knowledge of the requestor's language preference. For example, a user may invoke service A on computer 1. Service A may request assistance from service B on computer 2, and service B may need to send messages to the user even though the usage is indirect.

3. They do not allow use of a new function that is supported in a language that could be understood by the user if the preferred language is not yet available.

Even where the national language problem is solved, the fact that computer users are becoming more heterogeneous as the usage of computers spreads raises other problems. For example, not only may the national language preference of users in a distributed data processing system differ, but the level of experience or knowledge of the users may vary widely. In many cases, different classes of users need to use the same computer services, and this requires messages to be customized for each class of user. For example, a programmer could understand the message, "Node XYZ does not respond, reinitialization will take 10 minutes." and could arrange other work until it became available. However, mail room data entry personnel whose work depends on node XYZ might more easily understand, "Take a 10 minutes coffee break and then try again." Some message could, of course, be understood by all classes of users. Therefore, not only are translations of all messages needed for users in different national languages, but some messages must be customized for different classes of users.

In European patent application 84101732.0 there is described a data processing system which facilitates concurrent multi-lingual use which uses national language indexes together with specialized services to provide complete support in the national language preferred by the user. By "complete", it is meant that the user will not sense output (e.g. see, hear, or feel in the case of braille) any other language unless it is one the user has specified as an acceptable alternative, and all input by the user (e.g. typed or spoken) is in the preferred national language. The national language indexes are selected either when the user is enrolled, or from the "Sign On" entry screen if users are not enrolled. More than one national language index is given per user, a primary index which identifies the language most preferred by a user, and one or more secondary indexes that identify languages that the user can understand even though they are not the preferred language. Use of these indexes allow all programs, including application, application control, and supervisor programs, to be independent of the user's chosen national language.

The national language indexes are used for a data collection that contains message models. Message models are stored via a message identifier primary key that is common for all usage and a secondary key that is the national language index. A central message service composes messages from message models by substituting language independent variable values before the message is shown to the user. More particularly, the message service receives requests for message text from application, application control, and supervisor programs. The requesting program supplies the message identifier, and the message service uses that as the primary key for retrieval from one or more data collections containing message models. The message service uses as a secondary key the national language index which is set when the user signs on to the computer. The message model data collections may be organized in any manner that allows use of primary and secondary keys. All such collections have a secondary key to identify the national language of the message model. In addition to the language index that is set when the user signs on, other values are set to identify an order of search among data collections according to the classification of the current user. The message service searches different data collections until it finds the first occurrence of the requested message model in the national language needed for a particular user. This classification index could be used as a tertiary index within a single data collection in an alternative implementation. That message model is composed and sent to application control. A message coordinator program in application control checks the message identifier and the type of output device to determine what action is necessary.

Separate data collections for each language contain other types of text that are more specialized or of greater volume than messages. These data collections contain the national language index as a standard part of their identifying name. The collections are made available for each user so the order of search for named elements will find the material in the primary (preferred) or secondary (usable) national language. Examples of use include on-line documentation, HELP texts, static text on display panels, and sample data for application programs or application usage environments. The idiosyncrasies and differences between languages create problems that sometimes are best solved by language-dependent versions of programs. Such cases are likely to occur when the program must be adjusted because of differences in length or format for the same information in different languages. The advantages of such data collections being available for all programs are that all input required of a user and all text responses to the user can be in the national language of the user and, therefore, concurrent, multi-lingual use of the system is possible. For example, a French speaking user and an English speaking user can use the same programs on the same system concurrently without encountering any text in the other user's language.

In European patent application 84105755.7, the basic system is improved by making a program independent of the national language in which the input to the computer is received. The national language index is used to obtain variable names and the text strings associated with each variable, in pairs. The program can obtain the variable-name/text-string pairs directly or a central service may be requested to store the text strings for retrieval via the variable name. The variable name has a particular meaning to the program and the associated text string is the language independent input that will trigger that meaning. That is, input from the user can be compared with text strings associated with relevant variables to find the meaning known to a language-dependent program. National language indexes are used to locate the appropriate file to define command verb synonyms, a technique common to other operating systems. The technique of variable-name/text-string pairs for use with various types of input is similar to, but more general than command-verb synonym processing.

Briefly summarizing, when a program which wishes to output a message, it calls a system service, e.g. COMPOSE, which extracts the correct language message skeleton, places the variable data in the message, and outputs it. A problem occurs when one process wishes to send a message across a node to another process which may represent a user with a different national language than the first user's language. Specifically, the COMPOSE procedure would translate the message using the first user's national language. The problem of sending messages from terminals to a host through a node has been addressed in patent application EP-A-0014312, without, however, being concerned either by a concurrent use by the users terminals, or by a multilingual system.

Summary of the Invention

The present invention overcomes the foregoing problem by sending not the composed message, but the message identification and the names of the variable data and their contents. The receiving process can set the variables and call the COMPOSE function which will now build the message using the correct national language-identifier.

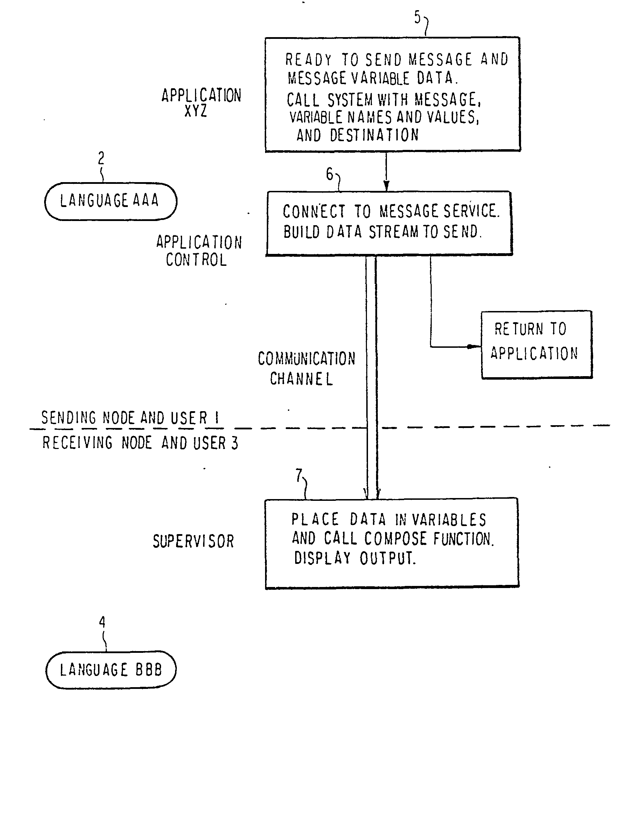

Brief Description of the Drawing

The foregoing and other objects, aspects, and advantages of the invention will be better understood from the following detailed description of a preferred embodiment with reference to the drawing, the sole figure of which is a block diagram illustrating the flow of the multi-lingual messages across nodes according to the invention.

Description of the preferred Embodiment

The above-referenced application 84101732.0 describes in detail the environment of concurrent multi-lingual use in data processing systems in which the present invention is used. Application 84101732.0 is incorporated herein by reference and the reader is referred to that application for further background information.

Reference is now made to the drawing figure for the following discussion. A user running on node 1 has an application XYZ which can send a message to other users in the same or different nodes. The other user and node is known as the receiving node 3. The sending user 1 uses language AAA. These receiving user 3 uses language BBB, which may be the same language as that of the sending user or a different one. The languages are represented by some storage location, variable, etc., 2 and 4, being set to a value which represents a specific language, e.g. English might be 0 and Spanish might be 6.

Assume application XYZ has a message to send. The message text is stored in a data base. To access the message, the application needs the message identification (a character string) and the values to place in the variable text locations of the message. This is described in detail in the above-referenced European application 84101732.0. After gathering this data 5 if the message were to be sent only to the user where the application is running, i.e. the user using language AAA, the application could simply call the COMPOSE function for the correct message identification. The COMPOSE function would return the composed message, complete with the variable data inserted, to the application which can then display it.

This process will not work in the general case of two users as illustrated in the drawing since the message would be composed using language AAA and the receiving user desires to see the message in language BBB. To solve this problem, instead of composing the message in the sending user's process. The sending node and user determine the message identification of the message to be sent, and the names of the variables in that message as well as their content (5), and the identification of the user and node to receive the message. A system service 6 is called and passed the message identification, variable names and data, and the identification, and the identification of the receiver. The system service 6 connects to the receiving node and user 3 using whatever network capabilities the system offers. The message identification, the variable names, and the data associated with each variable are assembled into a string in a predetermined fashion known both to the sender and the receiver. The system service 6 then returns to the application that called it.

The system service 7 receives the message places the variable data in the correct variables (obtained from the passed string) and invokes the system COMPOSE function. Note that language BBB is used to compose the message. The resulting message is displayed on the receiving user's terminal in whatever manner is normal for the system.

## Claims

1. Method of providing a distributed, interactive data processing system with concurrent multilingual use by a plurality of users having different national language preferences, said method including the steps of establishing a message model data collection by storing message models via a message identifier primary key that is common to all usage and a secondary key that is the national language index, using a central message service to compose messages from message models received from said message model data collection using said primary and secondary keys in response to a call from an application, application control or supervisor program, communicating the composed messages to users in their national language preference, and sending a message across a node in the data processing system to a receiving process and display the message in the preferred national language of the receiving user, method characterized in that it comprises the steps of:

at the sending node, determining the message identification of the message to be sent, and the names of the variables in the message as well as their content, and the identification of the user and the node to receive the message;

sending the message identification, the names of the variables in the message and their content to the identified receiving node;

at the receiving node, placing the variable data in the correct variables to form a message model and using said central message service, composing a message from the message model using the secondary key at the receiving node; and

communicating the composed message to the user at the receiving node in the national language identified by the secondary key.

2. The method according to claim 1 wherein the step of sending is performed by assembling the message identification, the names of the variables in the message and their content into a string which is passed to the receiving node.

3. The method according to claim 1 further comprising the step at the sending node of returning to the application that generated the message after the step of sending.

## Patentansprüche

1. Verfahren zur Bereitstellung eines verteilten interaktiven Datenverarbeitungssystems mit gleichzeitiger mehrsprachiger Benutzung durch eine Vielzahl von Anwendern mit unterschiedlichen nationalen Sprachpräferenzen, wobei das genannte Verfahren die folgenden Schritte beinhalten: Bildung einer Nachrichtenmodell-Datensammlung durch Speicherung von Nachrichtenmodellen über einen Nachrichtenidentifizierungsprimärschlüssel, welcher für alle Anwendungen gemeinsam ist, und einen Sekundärschlüssel, welcher der nationale Sprachindex ist, Benutzung eines Zentralen Nachrichtendienstes zur Nachrichtenzusammenzustellung aus Nachrichtenmodellen, welche aus der genannten Nachrichtenmodell-Datensammlung empfangen werden, wobei die genannten Primär- und Sekundärschlüssel benutzt werden als Reaktion auf einen Anruf aus einem Anwendungs-, Anwendungssteuer- oder Überwachungsprogramm, Übermittlung der zusammengestellten Nachrichten den Anwendern in ihrer nationalen Sprachpräferenz, und Senden einer Nachricht über einen Netzknoten in dem Datenverarbeitungssystem zu einem Empfangsprozess und Anzeige der Nachricht in der bevorzugten nationalen Sprache des empfangenden Anwenders, wobei das Verfahren dadurch gekennzeichnet ist, dass es folgende Schritte enthält:

am Sendenetzknoten, Bestimmung der Nachrichtenidentifizierung der zu sendenden Nachricht und der Variablennamen sowie ihres Inhalts in der Nachricht, und Anwender- und Netzknotenidentifikation zum Empfang der Nachricht;

Senden der Nachrichtenidentifizierung, der Variablennamen sowie ihres Inhalts in der Nachricht an den identifizierten Empfangsnetzknoten;

am Empfangsnetzknoten, Anordnung der Variablen Daten in den richtigen Variablen zur Bildung eines Nachrichtenmodells und Benutzung des genannten zentralen Nachrichtendienstes, Zusammenstellung einer Nachricht aus dem den Sekundärschlüssel am Empfangsnetzknoten benutzenden Nachrichtenmodell;

Übermittlung der zusammengestellten Nachricht an den Anwender am Empfangsnetzknoten in der durch den Sekundärschlüssel identifizierten nationalen Sprache.

2. Verfahren nach Anspruch 1, worin der Sendeschritt durchgeführt wird durch Assemblierung der Nachrichtenidentifizierung, der Variablennamen und ihres Inhalts in der Nachricht in einer zeichenfolge, welche dem Empfangsnetzknoten zugeführt wird.

3. Verfahren nach Anspruch 1, enthaltend ferner den Schritt am Sendenetzknoten der Rückführung an die Anwendung, welche die Nachricht nach dem Sendeschritt generiert hat.

**Revendications**

1. Procédé pour permettre l'utilisation simultanée en plusieurs langues d'un système de traitement de données du type interactif et distribué, par une pluralité d'utilisateurs ayant différentes préférences en matière de langue nationale, ledit procédé comprenant des étapes consistant à établir un ensemble de données afférentes à des modèles de messages en stockant des modèles de messages au moyen d'une clé primaire d'identification de message qui est commune à tous les usages et d'une clé secondaire qui est l'index de langue nationale, à utiliser un service central de messages pour composer des messages à partir de modèles de messages reçus dudit ensemble de données en employant lesdites clés primaire et secondaire en réponse à un appel provenant d'un programme d'application, d'un programme de commande d'application ou d'un programme superviseur, à communiquer les messages composés aux utilisateurs dans leur langue nationale préférée, et à transmettre un message, à travers un noeud du système de traitement de données, à un processus de réception et afficher le message dans la langue nationale préférée de l'utilisateur qui le reçoit, procédé caractérisé en ce qu'il comprend les étapes suivantes consistant à:

déterminer, au noeud émetteur, l'identification du message à transmettre et les noms des variables du message et leur contenu, ainsi que l'identification de l'utilisateur et du noeud devant recevoir le message,

transmettre l'identification du message et le nom et le contenu des variables du message au noeud récepteur identifié,

placer, au noeud récepteur, les données afférentes aux variables dans les variables correctes pour former un modèle de message et utiliser ledit service central de messages, et composer un message depuis le modèle de message en se servant de la clé secondaire au noeud récepteur, et

communiquer le message composé à l'utilisateur au noeud récepteur dans la langue nationale identifiée par la clé secondaire.

2. Procédé selon la revendication 1 dans lequel l'étape de transmission est effectuée en assemblant l'identification du message, les noms des variables du message et leur contenu en une chaîne qui est communiquée au noeud récepteur.

3. Procédé selon la revendication 1, comprenant en outre une étape consistant, au noeud émetteur, à retourner à l'application qui a engendré le message après l'étape de transmission.

**5.** READY TO SEND MESSAGE AND MESSAGE VARIABLE DATA. CALL SYSTEM WITH MESSAGE, VARIABLE NAMES AND VALUES, AND DESTINATION

APPLICATION XYZ

**2.** LANGUAGE AAA

APPLICATION CONTROL

**6.** CONNECT TO MESSAGE SERVICE. BUILD DATA STREAM TO SEND.

RETURN TO APPLICATION

COMMUNICATION CHANNEL

SENDING NODE AND USER 1

RECEIVING NODE AND USER 3

**7.** PLACE DATA IN VARIABLES AND CALL COMPOSE FUNCTION. DISPLAY OUTPUT.

SUPERVISOR

**4.** LANGUAGE BBB